# EUROPÄISCHE PATENTSCHRIFT

(11) **EP 0 548 507 B1**
(45) Veröffentlichungstag und Bekanntmachung des Hinweises auf die Patenterteilung: **09.08.1995**
(21) Anmeldenummer: 92118652.4
(22) Anmeldetag: 31.10.1992
(51) Int. Cl.: B60R 19/50

(54) **Stossfänger für Fahrzeuge, insbesondere Kraftfahrzeuge**
Bumper for vehicles, in particular automotive vehicles
Pare-chocs pour véhicules, en particulier pour véhicules automobiles

(30) Priorität: 21.12.1991 DE 4142582
(43) Veröffentlichungstag der Anmeldung: 30.06.1993
(73) Patentinhaber: Dr.Ing.h.c. F. Porsche Aktiengesellschaft, 70435 Stuttgart (DE)
(72) Erfinder: Vogelgesang, Harald Werner, W-7131 Wurmberg (DE)

(56) Entgegenhaltungen:
- DE-A- 2 150 444
- FR-A- 2 325 540
- US-A- 4 387 920
- US-A- 4 466 646

## Beschreibung

Die Erfindung bezieht sich auf einen Stoßfänger für Fahrzeuge, insbesondere Kraftfahrzeuge, gemäß dem Oberbegriff des Patentanspruchs 1. Eine Vorrichtung dieser Art ist aus der FR-A-2 325 540 bekannt.

Bei einem bekannten Fahrzeug der eingangs genannten Gattung (Porsche 911 Carrera 2 und 4) ist im Bugbereich ein Stoßfänger vorgesehen, der sich aus einem formsteifen Träger und einer elastischen, den Endbereich des Fahrzeugs bildenden Abdeckung zusammensetzt, wobei an der großflächigen Abdeckung beiderseits eines Nummernschildes jeweils ein Leuchtenkasten zur Aufnahme einer Leuchteneinheit angeordnet ist. Die beiden Leuchtenkasten sind dabei in einem mittleren Bereich der Abdeckung vorgesehen, so daß ein oberer Rand der Abdeckung durchgehend an der angrenzenden Karosserie befestigbar ist.

Aufgabe der Erfindung ist es, bei randseitiger Anordnung des Leuchtenkastens bzw. der Leuchteneinheit an der Abdeckung solche Vorkehrungen zu treffen, daß einerseits eine funktionsgerechte Befestigung der Abdeckung in diesem Bereich gegeben ist (kein Durchhängen) und daß andererseits bei einem 30° Pendelschlag die Leuchteneinheit beschädigungslos zurückweichen und nach erfolgter Stoßbeaufschlagung wieder in ihre Ursprungsposition zurückkehren kann.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordnung eines schwertförmigen, relativbeweglich gelagerten Abstützelements unterhalb des randseitig an der Abdeckung ausgebildeten Leuchtenkastens einerseits ein Durchhängen der Abdeckung vermieden wird und daß andererseits bei einem 30° Pendelschlag die Leuchteneinheit ohne Beschädigung zurückweichen und nach erfolgter Stoßbeaufschlagung wieder in ihre ursprüngliche Lage zurückkehren kann. Das Abstützelement ist an seinem einen Ende an einem radhausseitigen Halter drehbar gelagert, wogegen das andere Ende des Abstützelementes an einer Aufnahme des formsteifen Trägers verschiebbar in Lage gehalten ist. Die Aufnahme ist endseitig am formsteifen Träger ausgebildet.

Am Leuchtenkasten zwischen den beiden aufzunehmenden Leuchten vorgesehene Aussparungen bewirken eine Sollbiegestelle des Leuchtenkastens bei einer Stoßbeaufschlagung und nehmen die Längenänderung des Leuchtenkastens bei der Verformung auf. Das Abstützelement ist nach oben gewölbt, um eine Vorspannung für die Abdeckung zu erzeugen.

Ein Ausführungsbeispiel der Erfindung ist in der Zeichnung dargestellt und wird im folgenden näher erläutert:
Es zeigt
- Fig.1: eine Teilseitenansicht auf einen Bugbereich eines Personenkraftwagens mit einem Stoßfänger,

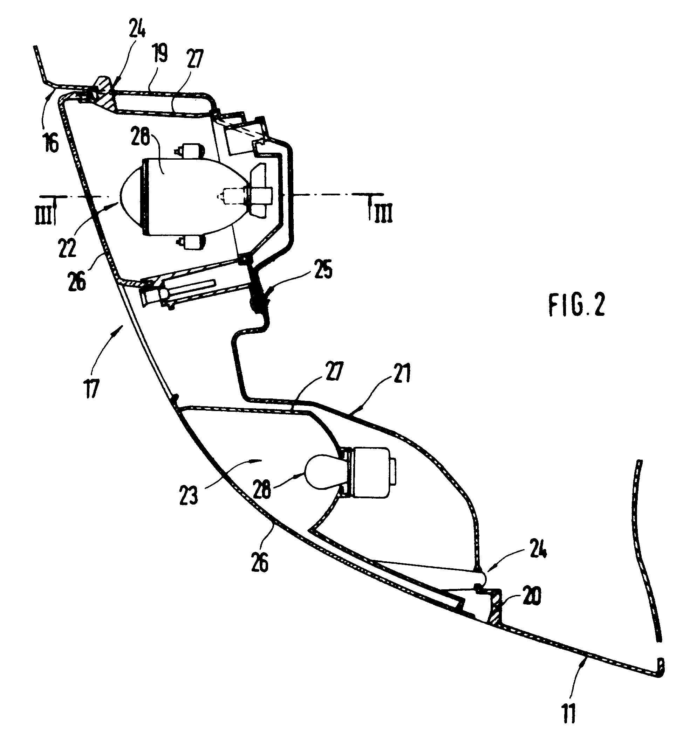

- Fig. 2: einen Schnitt nach der Linie II-II der Fig. 1 in größerem Maßstab,
- Fig. 3: einen Schnitt nach der Linie III-III der Fig. 2 in größerem Maßstab,
- Fig. 4: eine Teildraufsicht auf den Leuchtenkasten der Abdeckung, den formsteifen Träger und das Abstützelement, teilweise im Schnitt.
- Fig. 5: einen Schnitt nach der Linie V-V der Fig. 4 in größerem Maßstab,

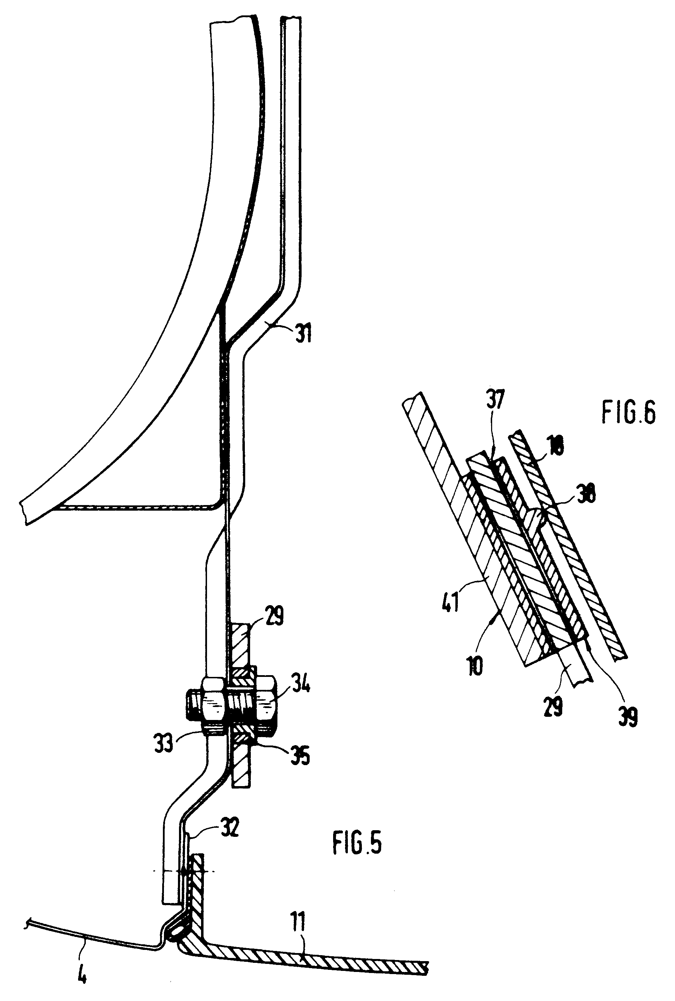

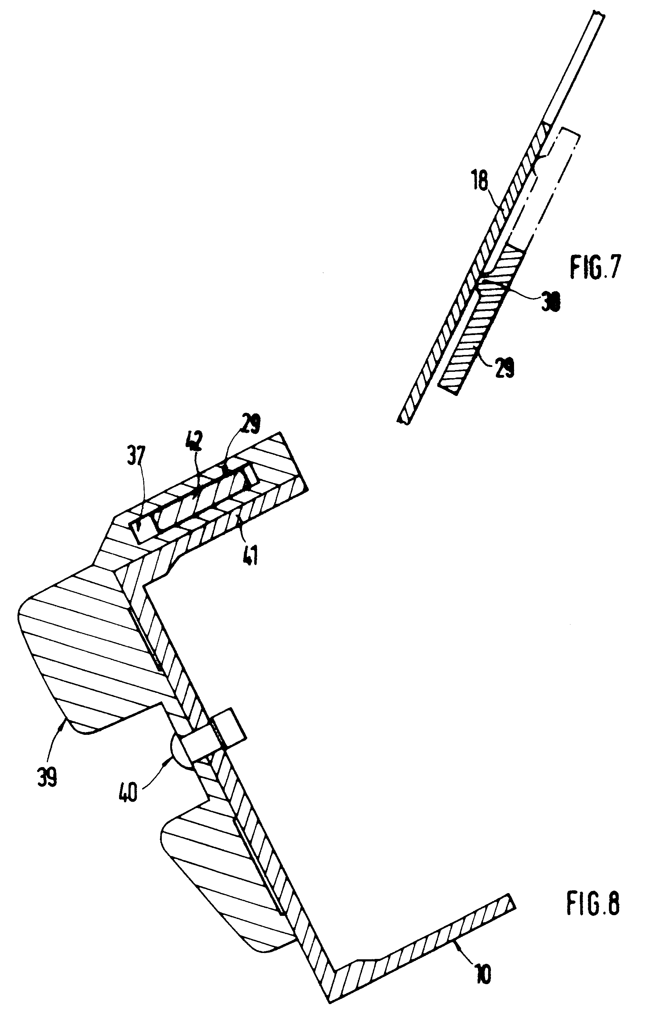

- Fig. 6: einen Schnitt nach der Linie VI-VI der Fig. 4 in größerem Maßstab,
- Fig. 7: einen Schnitt nach der Linie VII-VII der Fig. 4 in größerem Maßstab,
- Fig. 8: einen Schnitt nach der Linie VIII-VIII der Fig. 4 in größerem Maßstab,
- Fig. 9: einen Schnitt nach der Linie IX-IX der Fig. 1 in größerem Maßstab,
- Fig. 10: eine perspektivische Ansicht von vorne auf den formsteifen Träger und das Abstützelement,
- Fig. 11: eine Ansicht in Pfeilrichtung S der Fig. 4.

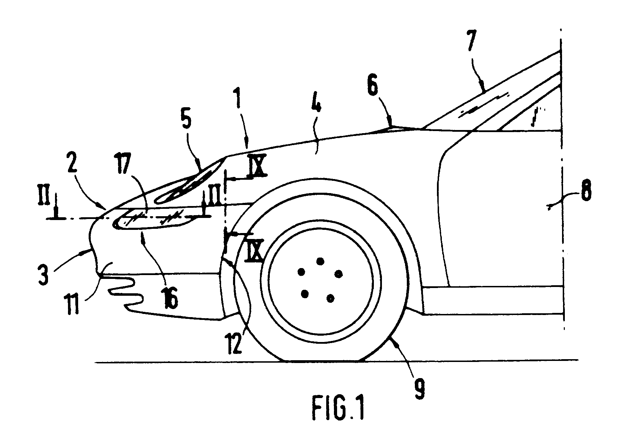

Fig. 1 zeigt einen Bugbereich eines Personenkraftwagens 1 mit einem Aufbau 2, der sich im dargestellten Bereich aus einem Stoßfänger 3, einem vorderen Seitenteil 4, einem Scheinwerfer 5, einer vorderen Haube 6, einer Windschutzscheibe 7, einer Tür 8 und Vorderrädern 9 zusammensetzt.

Der Stoßfänger 3 umfaßt einen formsteifen Träger 10 und eine elastische, den Endbereich des Aufbaues 2 bildende Abdeckung 11, die dem Träger 10 vorgelagert und seitlich bis zu einem angrenzenden Radhaus 12 der Vorderräder 9 herumgezogen ist.

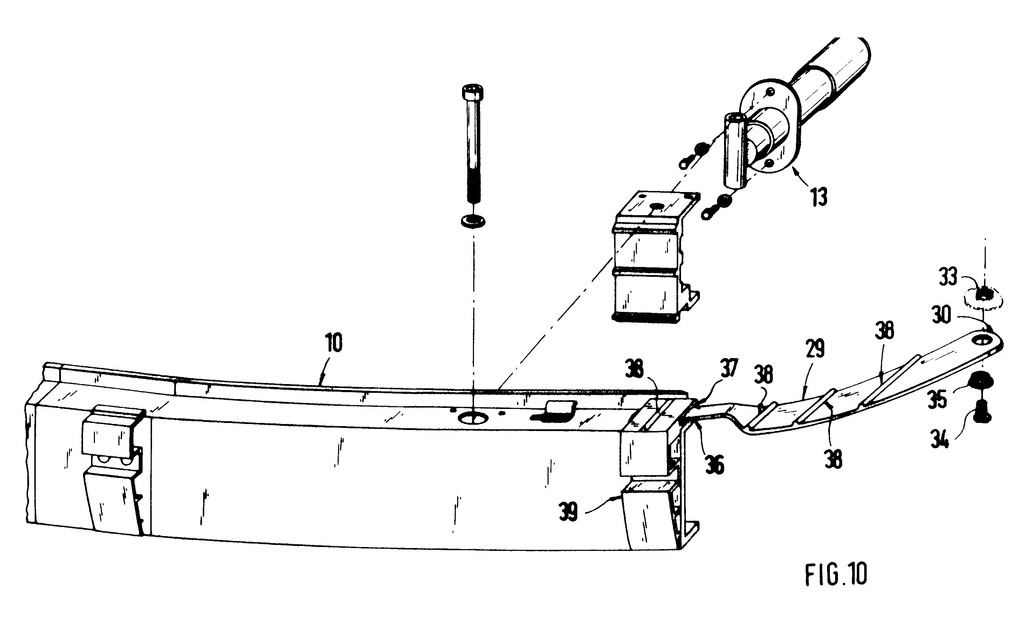

Der etwa U-förmige formsteife Träger 10, der beispielsweise durch ein in der Draufsicht gesehen gebogenes Strangpreßprofil aus Leichtmetall (Aluminium) gebildet wird, ist mittels Pralldämpfer 13 an nicht näher dargestellten Längsträgern des Aufbaues 2 abgestützt (Fig. 10).

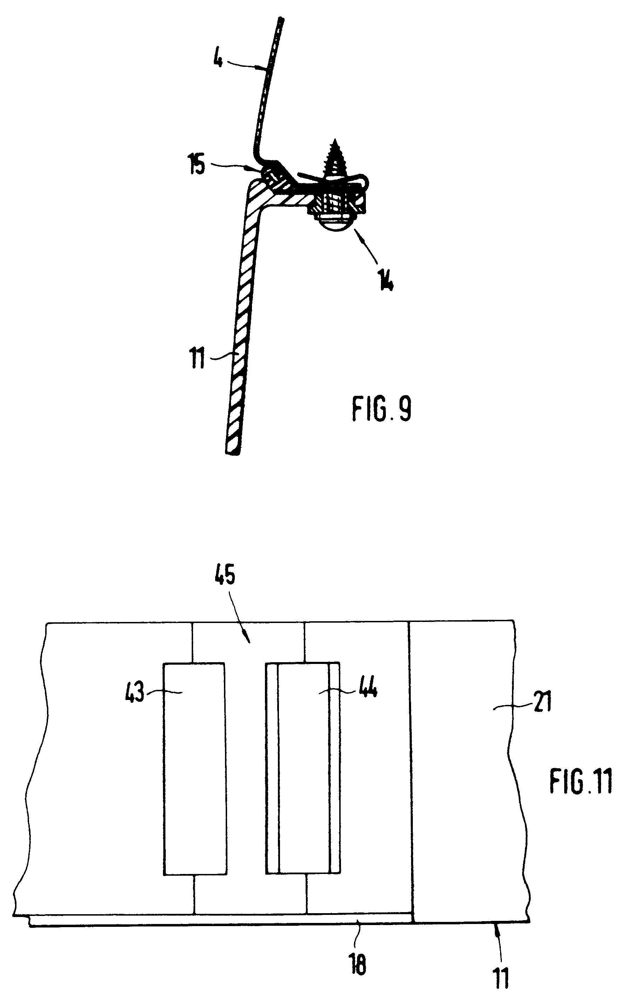

Die elastische Abdeckung 11 ist mehrfach mittels herkömmlicher Befestigungselemente 14 an einem darüberliegenden, feststehenden Aufbauteil (z.B. Seitenteil 4) in Lage gehalten, wobei zwischen Aufbauteil und abgestelltem oberem Randbereich der Abdeckung 11 ein Dichtungskeder 15 vorgesehen ist (Fig.9).

Ferner sind an der elastischen Abdeckung 11 jeweils im Bereich unterhalb der Scheinwerfer 5 nischenförmige Leuchtenkasten 16 angeordnet, in die Leuchteneinheiten 17 eingesetzt sind (Fig.1).

Die nischenförmigen Leuchtenkasten 16 sind randseitig an der Abdeckung 11 ausgebildet, wobei jeder Leuchtenkasten 16 durch eine untere, etwa horizontal ausgerichtete Wand 18, zwei seitliche von der Abdeckung 11 nach innen geführte aufrechte Wandabschnitt 19, 20 und eine hintere, aufrechte Begrenzungswand 21 gebildet wird.

Die beiden seitlichen Wandabschnitte 19, 20 münden einstückig in die hintere Begrenzungswand 21 ein, wobei die hintere Begrenzungswand 21 einen, den eingesetzten Leuchten angepaßten Formverlauf aufweist.

Eine obere Begrenzungswand ist aufgrund der randseitigen Anordnung des Leuchtenkastens 16 nicht vorgesehen.

Jede Leuchteneinheit 17 umfaßt einen Nebelscheinwerfer 22 und eine Blinkleuchte 23, die nebeneinanderliegend in den Leuchtenkasten 16 eingesetzt sind. Sowohl der Nebelscheinwerfer 22 als auch die Blinkleuchte 23 sind über eine Steckverbindung 24 und/oder eine Schraubverbindung 25 mit dem Leuchtenkasten 16 fest verbunden.

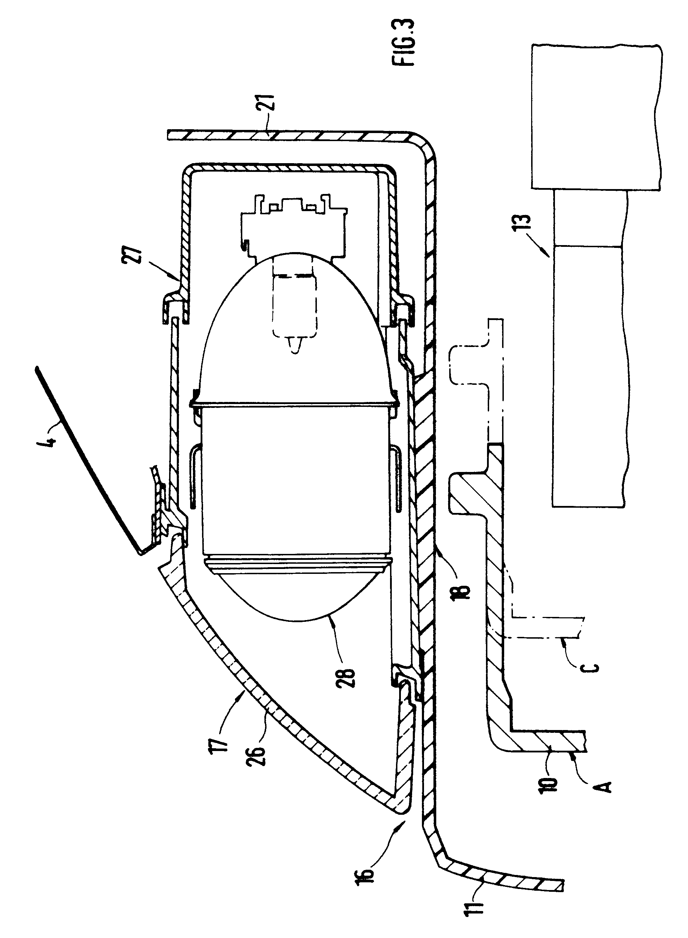

Der Nebelscheinwerfer umfaßt gemäß Fig. 3 eine Streuscheibe 26 und ein zweiteiliges Gehäuse 27. das eine Beleuchtungsquelle 28 aufnimmt.

Die Blinkleuchte 23 besitzt prinzipiell einen ähnlichen Aufbau wie der Nebelscheinwerfer 22.

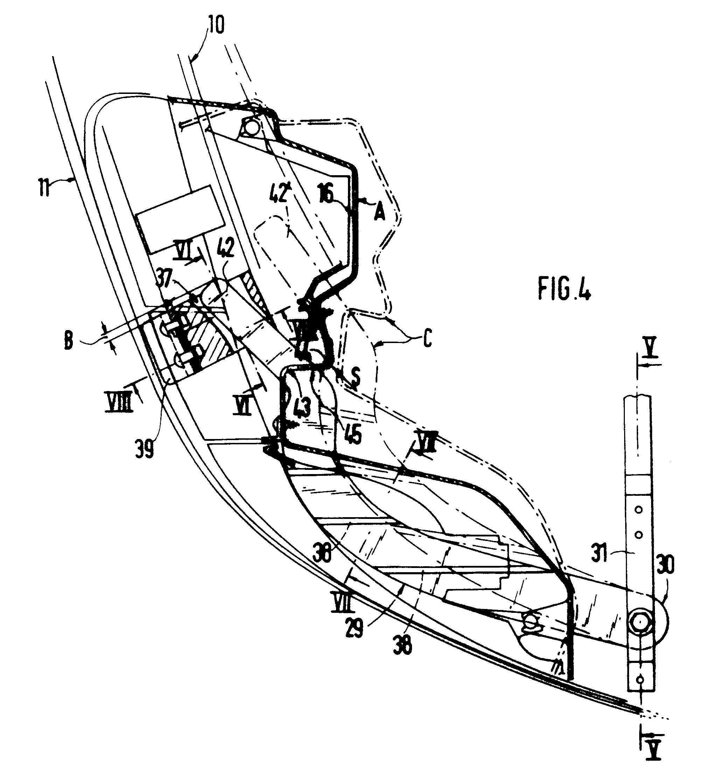

Um ein Durchhängen der elastischen Abdeckung 11 im Bereich des eine relativ große Quererstreckung aufweisenden, randseitig angeordneten Leuchtenkastens 16 zu vermeiden und um ein beschädigungsloses Zurückweichen und ein nachträgliches Zurückkehren der Leuchteneinheit 16 bei einem 30° Pendelschlag zu gewährleisten, ist vorgesehen, daß der randseitig ausgebildete Leuchtenkasten 16 zumindest abschnittsweise auf einem schwertförmigen, relativbeweglich gelagerten Abstützelement 29 aufliegt (Fig.4).

Das etwa horizontal ausgerichtete, schwertförmige Abstützelement 29 ist an seinem einen Ende 30 drehbar mit einem radhausseitigen Halter 31 verbunden.

Der radhausseitige Halter 31 erstreckt sich in Fahrzeugquerrichtung und ist einerseits mit dem Radhaus 12 und andrerseits mit einem nach innen abgestellten Flansch 32 des Seitenteils 4 fest verbunden (z.B. verschweißt). Am etwa U-förmig profilierten Halter 31 ist örtlich eine Schweißmutter 33 angeordnet, in die eine Befestigungsschraube 34 für das Abstützelement 29 eingedreht ist (Fig. 5). Ferner sind eine oder mehrere Buchsen 35 zur drehbaren Lagerung des Abstützelementes 29 vorgesehen, die die Befestigungsschraube 34 umgeben und in eine Öffnung des Abstützelementes 29 eingesetzt sind (Fig. 4).

Das andere Ende 36 des Abstützelementes 29 ist in einer Aufnahme 37 des formsteifen Trägers 10 verschiebbar in Lage gehalten, dergestalt, daß das Abstützelement 29 in Höhenrichtung fixiert ist, jedoch eine Schwenkbewegung des Abstüztelements 29 innerhalb der Aufnahme 37 möglich ist (Fig. 10). Das Abstützelement 29 erstreckt sich unterhalb der etwa horizontal ausgerichteten unteren Wand 18 des Leuchtenkastens 16.

Am Abstützelement 29 sind örtlich in Längsrichtung verlaufende vorstehende Rippen 38 ausgebildet, auf denen der Leuchtkasten 16 linienförmig aufliegt. Die Rippen 38 sind parallel zueinander ausgerichtet und verlaufen mit Abstand zueinander.

Gemäß den Fig. 8 und 10 ist die schlitzförmige Aufnahme 37 an einem endseitig auf den formsteifen Träger 10 aufgesetzten Stoßfängerhorn 39 aus Aluminium oder Kunststoff vorgesehen.

Das Stoßfängerhorn ist durch Miete 40 mit dem dahinterliegenden Träger 10 verbunden.

Die Aufnahme 37 erstreckt sich oberhalb eines horizontal ausgerichteten oberen Schenkels 41 des formsteifen Trägers 10 und ist in Höhenrichtung so bemessen, daß ein klapperfreier Spielsitz zwischen Aufnahme 37 und Abstützelement 29 gegeben ist.

In der Draufsicht gesehen weist die Aufnahme 37 eine wesentlich größere Breite auf als ein schmaler, langgestreckter Endebereich 42 des Abstützelementes 29, da bei einer Krafteinwirkung der formsteife Träger 10 und das Abstützelement 29 eine Relativbewegung ausüben und die Längenänderung des Abstützelementes 29 in der Aufnahme 37 aufgenommen werden muß. In der Einbaustellung A überragt der Endbereich 42 des Abstützelementes 29 die Aufnahme 37 nur geringfügig (Maß B), wogegen nach einer Stoßbeaufschlagung (Stellung C) der Endbereich 42 die Aufnahme 37 um ein größeres Maß als Maß B überragt.

Der formsteife Träger 10 endet in Querrichtung gesehen etwa im äußeren Randbereich des Nebelscheinwerfers 22.

In einem Bereich zwischen den beiden Leuchten 22, 23 der Leuchteneinheit 17 sind an der hinteren Begrenzungswand 21 des Leuchtenkastens 16 aufrecht verlaufende Aussparungen 43, 44 im Bereich einer Z-förmigen Falte 45 vorgesehen, die eine Sollbiegestelle für den Leuchtenkasten 16 bei einer Kraftbeaufschlagung definieren und die Längenänderung definiert aufnehmen (Fig. 4). Nach erfolgter Stoßbeaufschlagung werden die Abdeckung 11 mit den Leuchteneinheiten 17 und das Abstützelement 29 durch die Rückstellkraft der Pralldämpfer 13 wieder in ihre ursprüngliche Lage (Einbaustellung A) zurückgeführt.

## Patentansprüche

1. Stoßfänger (3) für Fahrzeuge (1), insbesondere Kraftfahrzeuge, der einen formsteifen Träger (10) und eine elastische, den Endbereich des Aufbaues (2) des Fahrzeuges (1) bildende Abdeckung (11) umfaßt, an der zumindest ein Leuchtenkasten zur Aufnahme einer Leuchteneinheit (16) ausgebildet ist, **dadurch gekennzeichnet**, daß der randseitig an der Abdeckung (11) angeordnete Leuchtenkasten (16) zumindest abschnittsweise auf einem schwertförmig ausgebildeten, relativbeweglich drehbar an die Karrosserie gelagerten Abstützelement (29) aufliegt.

2. Stoßfänger nach Anspruch 1, **dadurch gekennzeichnet**, daß das Abstützelement (29) unterhalb einer etwa horizontal ausgerichteten unteren Wand (18) des Leuchtenkastens (16) verläuft.

3. Stoßfänger nach den Ansprüchen 1 und 2, **dadurch gekennzeichnet**, daß an der dem Leuchtenkasten (16) zugekehrten Seite des Abstützelements (29) örtlich in Längsrichtung verlaufende vorstehende Rippen (38) ausgebildet sind, auf denen der Leuchtenkasten (16) aufliegt.

4. Stoßfänger nach den Ansprüchen 1 und 2, **dadurch gekennzeichnet**, daß das Abstützelement (29) nach oben hin in Richtung Leuchtenkasten (16) gewölbt ist.

5. Stoßfänger nach einem oder mehreren der vorangegangenen Ansprüchen, **dadurch gekennzeichnet**, daß das schwertförmige Abstützelement (29) an seinem einen Ende (30) an einem radhausseitigen Halter (31) drehbar gelagert ist.

6. Stoßfänger nach einem oder mehreren der vorangegangenen Ansprüche, **dadurch gekennzeichnet**, daß das Abstützelement (29) an seinem anderen Ende (36) in eine Aufnahme (37) des formsteifen Trägers (10) eingreift und dort in definierter Weise verschiebbar in Lage gehalten ist, wobei das Abstützelement (29) in Höhenrichtung gesehen in der Aufnahme (37) fixiert ist.

7. Stoßfänger nach Anspruch 6, **dadurch gekennzeichnet**, daß die schlitzförmige Aufnahme (37) an einem endseitig am formsteifen Träger (10) vorgesehenen Stoßfängerhorn (39) ausgebildet ist.

8. Stoßfänger nach Anspruch 7, **dadurch gekennzeichnet**, daß die Aufnahme (37) auf einen oberen, etwa horizontal ausgerichteten Schenkel (41) des formsteifen Trägers (10) aufgesetzt ist.

9. Stoßfänger nach einem oder mehreren der vorangegangenen Ansprüche, **dadurch gekennzeichnet**, daß die Aufnahme (37) in der Draufsicht gesehen so gestaltet ist, daß eine Verschwenkbewegung des Abstützelements (29) bei einer Stoßbeaufschlagung auf den Stoßfänger (3) und eine nachfolgende Rückstellbewegung des Abstützelements (29) bzw. des Stoßfängers (3) gewährleistet ist.

10. Stoßfänger nach einem oder mehreren der vorangegangenen Ansprüche, **dadurch gekennzeichnet**, daß das Abstützelement (29) nach erfolgter Stoßbeaufschlagung durch die Rückstellkraft der Pralldämpfer (13) wieder in seine ursprüngliche Lage zurückgeführt wird.

11. Stoßfänger nach Anspruch 1, **dadurch gekennzeichnet**, daß an einer hinteren aufrechten Begrenzungswand (21) des Leuchtenkastens (16) im Bereich einer Z-förmigen Falte (45) Aussparungen (43, 44) vorgesehen sind, die die Längenänderungen des Leuchtenkastens (16) bei einer Stoßbeaufschlagung auf den Stoßfänger (3) aufnehmen.

## Claims

1. A bumper (3) for vehicles (1), in particular motor vehicles, comprising a non-deformable support (10) and a resilient covering (11) which forms the end region of the body (2) of the vehicle (1) and on which at least one lamp casing for receiving a lamp unit (16) is formed, **characterized in that** the lamp casing (16) mounted on the edge on the covering (11) rests at least in part on a sword-shaped support member (29) rotatably mounted on the bodywork for relative movement thereto.

2. A bumper according to Claim 1, **characterized in that** the support member (29) extends below a lower wall (18) of the lamp casing (16) orientated substantially horizontally.

3. A bumper according to Claims 1 and 2, **characterized in that** projecting ribs (38), which extend in the longitudinal direction and on which the lamp casing (16) rests, are formed locally on the side of the support member (29) facing the lamp casing (16).

4. A bumper according to Claims 1 and 2, **characterized in that** the support member (29) is curved upwards towards the lamp casing (16).

5. A bumper according to one or more of the preceding Claims, **characterized in that** the sword-shaped support member (29) is mounted rotatably at one end (30) thereof on a holding means (31) on the wheel housing.

6. A bumper according to one or more of the preceding Claims, **characterized in that** the support member (29) engages at the other end (36) thereof in a receiving means (37) of the non-deformable support (10) and is held in position there so as to be displaceable in a pre-determined manner, wherein the support member (29) is fixed in the receiving means (37) as viewed in the vertical direction.

7. A bumper according to Claim 6, **characterized in that** the slot-shaped receiving means (37) is formed on a bumper flange (39) provided on the end of the non-deformable support (10).

8. A bumper according to Claim 7, **characterized in that** the receiving means (37) is mounted on a substantially horizontal upper arm (41) of the non-deformable support (10).

9. A bumper according to one or more of the preceding Claims, **characterized in that** the receiving means (37) is designed in such a way, as seen in plan view, as to ensure a pivoting movement of the support member (29) in the event of an impact upon the bumper (3) and a following restoring movement of the support member (29) or the bumper (3).

10. A bumper according to one or more of the preceding Claims, **characterized in that** the support member (29) is returned to its original position again by the restoring force of the impact damper (13) after an impact has occurred.

11. A bumper according to Claim 1, **characterized in that** recesses (43, 44) are provided on a rear vertical boundary wall (21) of the lamp casing (16) in the region of a Z-shaped fold (45), the recesses (43, 44) absorbing the changes in the length of the lamp casing (16) in the event of an impact upon the bumper (3).

## Revendications

1. Pare-chocs (3) pour véhicules (1), en particulier véhicules automobiles, comprenant un support (10) de forme rigide et un recouvrement (11) élastique, constituant la zone d'extrémité du châssis (2) du véhicule (1) et sur lequel est réalisé au moins un boîtier d'éclairage destiné à recevoir un ensemble d'éclairage (16), caractérisé en ce que le boîtier d'éclairage (16), disposé du côté bordure sur le recouvrement (11), repose au moins par sections sur un élément d'appui (29) en forme de sabre, monté avec une mobilité relative, de façon à pouvoir tourner, sur la carrosserie.

2. Pare-chocs selon la revendication 1, caractérisé en ce que l'élément d'appui (29) s'étend au-dessous d'une paroi inférieure (18), orientée à peu près horizontalement, du boîtier d'éclairage (16).

3. Pare-chocs selon les revendications 1 et 2, caractérisé en ce que, du côté tourné vers le boîtier d'éclairage (16), de l'élément d'appui (29), sont réalisées des nervures (38) faisant saillie, s'étendant localement dans la direction longitudinale et sur lesquelles le boîtier d'éclairage (16) repose.

4. Pare-chocs selon les revendications 1 et 2, caractérisé en ce que l'élément d'appui (29) est incurvé vers le haut en direction du boîtier d'éclairage (16).

5. Pare-chocs selon l'une ou plusieurs des revendications précédentes, caractérisé en ce que l'élément d'appui (29) en forme de sabre est monté de façon à pouvoir tourner à une de ses extrémités (30), sur un support (31) situé du côté du compartiment de roue.

6. Pare-chocs selon l'une ou plusieurs des revendications précédentes, caractérisé en ce que l'élément d'appui (29) s'engage à son autre extrémité (36) dans un logement (37) du support (10) de forme rigide et y est maintenu en position, d'une façon permettant un coulissement de manière définie, l'élément d'appui (29) étant fixé dans le logement (37) lorsque l'on observe en direction de la hauteur.

7. Pare-chocs selon la revendication 6, caractérisé en ce que le logement (37) en forme de fente est réalisé sur un cornet de pare-chocs (39) prévu du côté extrémité sur le support (10) de forme rigide.

8. Pare-chocs selon la revendication 7, caractérisé en ce que le logement (37) est posé sur une branche supérieure (41), orientée à peu près horizontalement, du support (10) de forme rigide.

9. Pare-chocs selon l'une ou plusieurs des revendications précédentes, caractérisé en ce que le logement (37), observé en vue de dessus, est d'une forme permettant d'assurer un mouvement de pivotement de l'élément d'appui (29), en cas de sollicitation par un choc sur le pare-chocs (3), puis un mouvement de rappel subséquent de l'élément d'appui (29) ou du pare-chocs (3).

10. Pare-chocs selon l'une ou plusieurs des revendications précédentes, caractérisé en ce que l'élément d'appui (29) est ramené à sa position initiale une fois la sollicitation par un choc effectuée, du fait de la force de rappel de l'amortisseur de chocs (13).

11. Pare-chocs selon la revendication 1, caractérisé en ce que sur une paroi de limitation (21) verticale arrière du boîtier d'éclairage (16) sont prévus dans la zone d'un pli en Z (45) des évidements (43, 44) qui supportent les variations de longueur du boîtier d'éclairage (16) en cas de sollicitation par chocs sur le pare-chocs (3).
